# EUROPÄISCHE PATENTSCHRIFT

(11) **EP 3 369 614 B1**
(45) Veröffentlichungstag und Bekanntmachung des Hinweises auf die Patenterteilung: **10.07.2019**
(21) Anmeldenummer: 18156887.4
(22) Anmeldetag: 15.02.2018
(51) Int. Cl.: B60N 2/56, B60N 2/58, B60N 2/70, B60N 2/00

(54) **POLSTERANORDNUNG**
UPHOLSTERY ASSEMBLY
DISPOSITIF DE COUSSIN

(30) Priorität: 16.02.2017 DE 102017103155
(43) Veröffentlichungstag der Anmeldung: 05.09.2018
(73) Patentinhaber: Hauer, Ernst, 54296 Trier (DE)
(72) Erfinder: Hauer, Ernst, 54296 Trier (DE)
(74) Vertreter: Wunderlich & Heim Patentanwälte Partnerschaftsgesellschaft mbB

(56) Entgegenhaltungen:
- EP-A1- 2 444 281
- DE-A1- 10 013 492

## Beschreibung

Die Erfindung betrifft eine Polsteranordnung mit einer Tragkonstruktion und mindestens einem dran angebrachten Polsterelement mit einem dreidimensionalen Gewebe, welches eine erste Gewebelage und mindestens eine zweite Gewebelage aufweist, welche unter Ausbilden eines hohlen Zwischenraums zueinander beabstandet und mittels Polfäden miteinander verbunden sind, gemäß dem Oberbegriffs des Anspruchs 1.

Eine derartige Polsteranordnung geht beispielsweise aus der DE 102 40 462 A1 hervor. Bei dieser Polsteranordnung ist ein Polsterelement mit einem dreidimensionalen Gewebe vorgesehen. Dieses dient als ein drucksteifes Abstandstextil und wird in einem Schaumstoffbereich eines Fahrzeugsitzes eingesetzt. Das Abstandstextil wird mit einem Bezugsmaterial versehen und umschlossen.

Ein weiteres Polsterelement mit einem dreidimensionalen Gewebe ist aus der DE 10 2010 033 654 A1 bekannt.

Zum Erzielen eines guten Sitzkomforts ist es bei Fahrzeugsitzen bekannt, Polsteranordnungen mit Belüftungseinrichtungen mit elektrischen Lüftern zu versehen. Derartige Sitze sind kostenaufwändig und haben ein relativ hohes Gewicht.

Der Erfindung liegt die **Aufgabe** zugrunde, eine Polsteranordnung anzugeben, bei welcher ein besonders guter Sitzkomfort erzielt wird.

Die Aufgabe wird nach der Erfindung durch eine Polsteranordnung mit den Merkmalen des Anspruchs 1 gelöst. Bevorzugte Ausführungsformen der Erfindung sind in den abhängigen Ansprüchen angegeben.

Die erfindungsgemäße Polsteranordnung ist dadurch gekennzeichnet, dass die erste Gewebelage zumindest bereichsweise mit einem Halterand ausgebildet ist, dass das dreidimensionale Gewebe über den Halterand der ersten Gewebelage mit wenigstens einem Teil der Tragkonstruktion verbunden ist und dass die zweite Gewebelage gegenüber der Tragkonstruktion vorsteht, wobei der Zwischenraum zum Luftaustausch seitlich offen ist.

Eine Grundidee der Erfindung besteht darin, ein dreidimensionales Gewebe in einer Polsteranordnung mit einer Tragkonstruktion derart anzuordnen, dass ein Zwischenraum zwischen den Gewebelagen des dreidimensionalen Gewebes zumindest bereichsweise seitlich offen ist, so dass ein Luftaustausch zur Umgebung stattfinden kann. Dabei kann die Polsteranordnung auch bei einem längeren Kontakt mit einer Person Feuchtigkeit in einem erhöhten Maße aufnehmen und auch ohne die Anordnung von elektrischen Lüftungselementen zuverlässig an die Umgebung abführen.

Dabei ist eine Gewebelage des dreidimensionalen Gewebes mit einem Halterand ausgebildet. Die erste Gewebelage kann so als eine Auflage oder Stützschicht für das dreidimensionale Gewebe dienen. Dabei kann die erste Gewebelage auch insgesamt auf einer Tragkonstruktion aufliegen. Insgesamt ist die Halterung der ersten Gewebelage so ausgebildet, dass die zweite Gewebelage gegenüber der Tragkonstruktion vorsteht, so dass die Tragkonstruktion die seitlichen Öffnungen zu dem Zwischenraum des dreidimensionalen Gewebes freigibt.

Eine bevorzugte Ausführungsform der Erfindung besteht darin, dass die Polfäden etwa vertikal zu der ersten Gewebelage und/oder der zweiten Gewebelage angeordnet sind, wobei ein im Wesentlichen formstabiler Zwischenraum gebildet ist. Die Polfäden können dabei vorzugsweise im Querschnitt eine Rechteckform aufweisen. Hierdurch sind diese besonders formstabil, so dass das so erzeugte dreidimensionale Gewebe einen formstabilen Zwischenraum bildet, selbst wenn die Polsteranordnung als eine Sitzfläche für eine Person verwendet wird.

Weiterhin ist es nach einer Ausführungsvariante der Erfindung bevorzugt, dass über eine Fläche des Polsterelements eine Dichte der Polfäden unterschiedlich ausgebildet ist. Hierdurch kann die Festigkeits- und Stabilitätseigenschaft des Polsterelementes über die Fläche unterschiedlich und gezielt eingestellt werden. Hierdurch kann gezielt ein Polsterungskomfort beeinflusst werden.

Nach einer Weiterbildung der Erfindung ist es vorteilhaft, dass in der ersten Gewebelage und/oder der zweiten Gewebelage Öffnungen, insbesondere im Bereich der Polfäden ausgebildet sind. Dabei hat das dreidimensionale Gewebe die Eigenschaft, dass es besonders durchlässig für Luft und Wasserdampf ist. Durch die Bildung der Polfäden können gezielt Öffnungen an einer Oberflächenseite zu dem Zwischenraum entstehen. Wasserdampf, der sich durch die Transpiration etwa beim Sitzen einer Person ergibt, kann so zuverlässig durch den Zwischenraum abgeleitet werden. Diese Ableitung kann dabei senkrecht oder parallel zur Hautoberfläche der Person erfolgen.

Besonders vorteilhaft ist es nach einer Weiterbildung der Erfindung, dass das dreidimensionale Gewebe als eine Sitzoberseite in einem direkten Kontakt mit einer aufzunehmenden Person angeordnet ist. Hierbei kann die entstehende Feuchtigkeit direkt in die Polfadenlage des dreidimensionalen Gewebes oder durch die beiden Gewebeseiten des dreidimensionalen Gewebes abgeleitet werden.

Weiter vorteilhaft ist es nach einer Ausführungsvariante der Erfindung, dass der Halterand der ersten Gewebelage gegenüber der zweiten Gewebelage seitlich vorsteht und durch Weben ausgebildet ist. Die erste Gewebelage mit dem Halterand ist dabei besonders stabil ausgebildet und kann so Auflagekräfte aufnehmen und seitlich an die Tragkonstruktion abgeben. Durch das Ausbilden eines seitlich vorstehenden Halterandes durch Weben mit der sonstigen Gewebelage wird eine hohe Stabilität erreicht, so dass eine hohe Lebensdauer der Polsteranordnung erzielt werden kann. Es ist auch möglich, dass die beiden Gewebelagen am Rand zusammen in einem Einspannelement eingespannt sind, wobei vorzugsweise ein Lüftungskanal entlang des Randes gebildet ist. Durch eine Zusammenfassung der Schussfäden wird die Tragfähigkeit des Gewebes besser ausgenutzt. Dabei ist weiter eine gute Durchlüftung des Zwischenraums gegeben.

Beide Gewebelagen sind dann im Halterand zusammengefasst. Durch die Durchlüftbarkeit des Gewebes entsteht ein selbstregulierendes Sitzklima, das heißt es findet nur Lüftung aufgrund der Wasserdampfpartialdruckdifferenz statt.

Gemäß einer bevorzugten Ausführungsform ist das Gewebe mit einem Halterand augebildet, der mit einer oder beiden Gewebelagen verbunden ist. Der Halterand ist mit der Tragkonstruktion am Rahmen verbunden. Fasst man insbesondere die Schussfäden der beiden Gewebelagen am Rand zusammen, so wird die Tragfähigkeit erhöht. Lässt man dabei eine Lage, vorzugsweise die obere, etwas länger am Rand, kann so eine zweistufige, progressive Traglastaufnahme erreicht werden. Wenn die erste Gewebelage sich ausreichend gedehnt hat, kommt die zweite Gewebelage zum Tragen. So können etwa schwerere Personen mit einer etwas erhöhten Polsterhärte abgefangen werden, während leichter gewichtige Personen das Polster als weicher empfinden.

Grundsätzlich ist die Einbauanordnung des dreidimensionalen Gewebes in der Polsteranordnung beliebig. Besonders vorteilhaft ist es nach einer Ausführungsform der Erfindung, dass die erste Gewebelage eine Unterseite und die zweite Gewebelage eine Oberseite des Polsterelementes bildet. Die Polsteranordnung kann aus einer Sitzfläche und einer Rückenlehne bestehen. Diese können getrennt oder einstückig ausgebildet, insbesondere gewebt sein.

Dabei kann ein besonders guter Polsterkomfort nach einer Weiterbildung der Erfindung dadurch erzielt werden, dass die obere zweite Gewebelage mit einer Konturierung ausgebildet, insbesondere gewebt ist. Die obere Gewebelage kann dabei mit Erhebungen und Vertiefungen ausgebildet sein, so dass sich eine gewünschte Anpassbarkeit an eine aufzunehmende Person ergeben kann.

Eine weitere bevorzugte Ausführungsform der Erfindung besteht darin, dass über die Fläche des Polsterelementes der Abstand zwischen der ersten Gewebelage und der zweiten Gewebelage unterschiedlich gewebt ist. Auch hierdurch kann eine Konturierung sowie ein Polsterkomfort beeinflusst werden. Insbesondere kann ein Abstand zwischen den Gewebelagen nach außen zu den seitlichen Öffnungen zunehmen, so dass eine verbesserte Feuchtigkeitsabfuhr erzielt wird. Durch die Bewegung einer aufsitzenden oder aufliegenden Person kann zudem ein gewisser Pumpeffekt erzeugt werden, welcher einen Luftaustausch in dem Zwischenraum des dreidimensionalen Gewebes erhöht.

Grundsätzlich kann die erfindungsgemäße Polsteranordnung beliebig eingesetzt werden. Besonders vorteilhaft ist es nach der Erfindung, dass ein Sitz, insbesondere ein Fahrzeugsitz oder Bürostuhl vorgesehen ist. Dieser ist dadurch gekennzeichnet, dass die zuvor beschriebene Polsteranordnung vorgesehen ist.

Der Fahrzeugsitz kann dabei insbesondere ein Sitz für ein Kraftfahrzeug oder für ein Flugzeug, insbesondere ein Passagiersitz für ein Großraumflugzeug sein. Bei diesen Sitzen ist es besonders vorteilhaft, wenn diese mit einem hohen Sitzkomfort bei gleichzeitig geringer Baugröße der Sitzfläche sowie der Rückenlehne ausgebildet werden können.

Eine weitere bevorzugte Ausführungsform der Erfindung besteht darin, dass ein Liegemöbel, insbesondere eine Liege oder ein Bett mit der zuvor beschriebenen Polsteranordnung vorgesehen ist. Auch hierbei kann ein guter Polsterungskomfort bei guter Feuchtigkeitsabfuhr bei kompakter Baugröße und geringem Gewicht erzielt werden.

Die Erfindung umfasst grundsätzlich auch ein Fertigungsverfahren. Durch eine Proportional-Servosteuerung der Maschinenschäfte einer Webmaschine können dreidimensionale Gewebe mit unterschiedlicher Polfadendichte effizient gewebt werden. Die Gewebekonstruktion lässt sich so von 3/6 zu 5/15 etc. ändern, wobei bei 3/6 drei Schussfäden mit dem Polfilament verbunden sind, während beide Seiten zusammen sechs Polfäden ergeben.

Die Gewebeherstellung auf einem Greifer Webstuhl gestattet einen Schussfadenwechsel bei laufender Teilefertigung. Teile können so mit einer unterschiedlichen Sitzhärte gestaltet werden. Insbesondere bei einstückig ausgebildeten Polsteranordnungen kann so eine Sitzfläche hart, ein Rückteil mittel und eine Kopfstütze weich ausgebildet werden. Vorteilhaft ist es weiterhin, dass zumindest bereichsweise elastische Schussfäden eingezogen werden, so dass hierdurch gezielt eine Sitzhärte des dreidimensionalen Gewebes beeinflusst werden kann. Der Schussfadenwechsel wird dabei so eingesetzt, um die technischen Eigenschaften des Gewebes zu verändern und einzustellen.

Durch eine vorzugsweise Ergänzung des Webstuhls mit einer sogenannten Jacquardmaschine lassen sich zudem dreidimensionale Lageabschnitte konturierter Teile herstellen, wodurch die Sitzkontur einstellbar ist. Der Einsatz geeigneter Steuersoftware erlaubt es zudem, Teile im CAD/CAM-Verfahren herzustellen, die nur durch einen Konturschnitt (Schneidevorgang) entlang der Jacquardkontur der Sitzkontur angepasst werden müssen.

Mittels proportional servogesteuerter Verstellung der Greifer und Greiferführungen lässt sich eine Dicke der gewebten Teile ändern. Es lassen sich Teile mit einem Dickenprofil herstellen. Die Einspannung des Gewebes durch eine geringere Dicke der dreidimensionalen Struktur an den Kettfadenseiten wäre vereinfacht.

Eine kontinuierliche Fertigung eines Teils, das sowohl die Sitzfläche als auch das Rückenteil umfasst, ermöglicht die Fertigung von Integralsitzen als einteilige Komponenten mit unterschiedlichen Härten in den Sitzflächen sowie in der Rückenlehne und der Kopfstütze. Durch eine geeignete Querschnitts-Profilvariation am Übergang von Rückenfläche zur Sitzfläche lassen sich zudem Integralsitze falten und so platzsparend in einem Fahrzeug unterbringen. Dies ist etwa bei Fahrzeugen mit einklappbarer dritter Sitzreihe vorteilhaft.

Durch Änderung der Schussfadendichte an der Oberseite der querseitigen Sitzkanten können Lufteintritte in den dreidimensionalen Aufbau realisiert werden. Hierdurch wird eine Belüftung des Raums zwischen den dreidimensionalen Materialseiten und damit den Kontaktflächen ermöglicht.

Der Wasserdampfpartialdruckunterschied zwischen dem Innenraumklima beziehungsweise der Umgebung von 22 °C und ca. 40% Feuchte und dem Wasserdampfpartialdruck der Haut mit ca. 32 °C und 90% relativer Feuchte der einsitzenden Person verursacht eine natürliche Luftströmung, die den Kontaktbereich ohne mechanische Hilfsmittel belüftet und so annähernd ein vergleichbares Klima zwischen den freien Flächen und den Kontaktflächen der einsitzenden Person ermöglicht.

Dreidimensionale Gewebe haben die inhärente Eigenschaft, dass sie immer Luft und Wasserdampf durchlässig sind. Insbesondere im Bereich der Polfäden entstehen Öffnungen von einer Oberflächenseite in den Zwischenraum. Wasserdampf, der sich durch die Transpiration des Passagiers bildet, kann so immer durch die Zwischenlage abgeleitet werden. Die Ableitung kann als perpendikular oder parallel zur Hautoberfläche des Passagiers erfolgen.

Das dreidimensionale Gewebe kann auch in den Sitzspiegeln direkt in den Bezug des Sitzes eingenäht werden. Der Sitzbezug besteht vorzugsweise in seiner Ausgestaltung aus dem dreidimensionalen Gewebemittelteil an den Seiten ergänzt durch Stoff oder Lederbezug. Durch eine entsprechende Verringerung der Schaumdicke in den Spiegeln entsteht so ein belüfteter Sitz und eine Rückenlage, die die entstehende Hautfeuchte ableitet.

Durch Aussparungen im Sitzschaum kann das dreidimensionale Gewebe unmittelbar in einen Schaum integriert werden. Die Belüftbarkeit des Sitzes kann somit durch jede Art von Wasserdampf durchlässigem Bezug hergestellt werden, insofern als er die offene Lüftungslage nicht behindert. Möglich sind auch Ledersitze mit einer entsprechenden perforierten Lederoberfläche.

Das dreidimensionale Gewebe kann grundsätzlich auch beim Schaumprozess direkt in den Schaum eingelegt werden und wird so durch die direkte Verbindung im Schaum fixiert. Die Art der Konstruktion ermöglicht besonders leicht die Herstellung von zwangsbelüfteten Sitzen, welche auch Klimasitze genannt werden.

Das Verfahren mittels einer Zweiseitenwebmaschine oder einer Doppelgewebe-Webmaschine, einer Jacquardmaschine und den proportionalen servogesteuerten Schäften ist insbesondere dazu geeignet, eine Integralkomponente herzustellen, die sowohl die Sitzfläche, das Rückenteil, die Kopfstütze und eine Sitzverlängerung umfassen kann. Die Falte, also der Schlitz zwischen Lehne und Sitzfläche, welche auch Schmutzfalte genannt wird, könnte so entfallen. Ein Zweiseitengewebe wird durch die Verwendung von rechteckigen Monofilamentgarnen besonders kippstabil. Die Garngrößen können in Bereichen vorzugsweise zwischen 0,3 bis 2 mm liegen. Andere Dimensionierung und Querschnittsgrößen sind möglich.

Gestaltet man die Sitz- und Rückenflächen in einem zweischaligen Aufbau aus zwei dreidimensionalen Geweben, so entsteht ein Zwischenraum, in den die Sitzbelegungserkennung und die Sitzheizung untergebracht werden können. Die untere Lage dient der Basisbefederung, die die Funktionen der Befederung übernimmt und somit dem Sitzkomfort dient. Die dreidimensionale Gewebeauflage, die dem Passagier zugewandt ist, kann als offene Sitzfläche mit textiler Haptik und anthropometrischen Eigenschaften frei gestaltet werden. Beide Lagen als dreidimensionales Gewebe gefertigt, insbesondere gewebt, haben die inhärente Eigenschaft der Luft- und Wasserdurchlässigkeit.

Die Erfindung wird nachfolgend anhand von bevorzugten Ausführungsbeispielen weiter beschrieben, welche schematisch in den beigefügten Zeichnungen dargestellt sind. In den Zeichnungen zeigen:
- Fig. 1: eine perspektivische Querschnittsansicht durch ein erfindungsgemäßes Polsterelement und
- Fig. 2: eine perspektivische teilgeschnittene Ansicht zur Sitzfläche eines Sitzes nach der Erfindung.

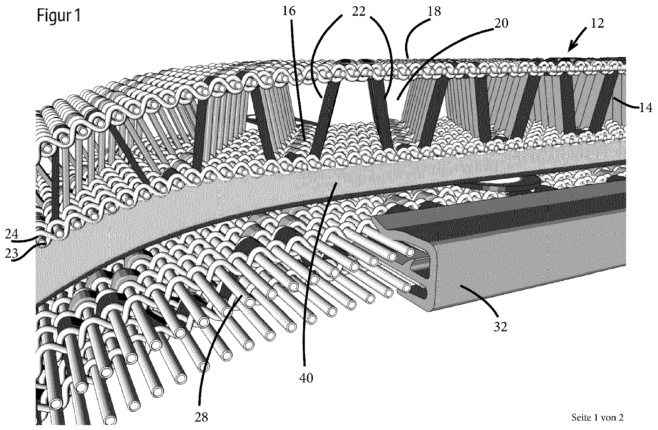

Fig. 1 zeigt in einer vergrößerten Darstellung ein erfindungsgemäßes Polsterelement 12 mit einem dreidimensionalen Gewebe 14. Das dreidimensionale Gewebe 14 weist eine untere erste Gewebelage 16 und eine obere zweite Gewebelage 18 auf, welche unter Ausbilden eines hohlen Zwischenraums 20 voneinander beabstandet sind. Die beiden Gewebelagen 16, 18 sind bereichsweise über bandförmige Polfäden 22 mit einem rechteckigen Querschnitt miteinander verbunden, insbesondere mit einander verwebt. Das dreidimensionale Gewebe 14 weist dabei in der Zeichnung längs gerichtete Kettfäden 24 und dazu quer angeordnete Schussfäden 23 auf. Bei der dargestellten Ausführungsform sind die Polfäden 22 in Kettfadenrichtung angeordnet, wobei die Polfäden 22 den Zwischenraum 20 im Wesentlichen senkrecht zu den beiden Gewebelagen 16, 18 durchlaufen. Hierdurch wird ein sehr formstabiles dreidimensionales Gewebe 14 mit einem formstabilen Zwischenraum 20 gebildet.

Einteilig mit der unteren ersten Gewebelage 1 ist ein seitlich vorstehender Halterand 28 gebildet, welcher von oben auf die zweite Gewebelage 18 wirkende Auflagekräfte aufnimmt und an eine seitliche Tragkonstruktion weiterleitet. In Fig. 1 ist lediglich ein Randprofil 32 dargestellt, welches fest mit dem Halterand 28 verbunden ist, etwa durch Verklemmen, Vernähen, Verkleben, Verschweißen oder in sonstiger geeigneter Weise. Über das Randprofil 32 kann das Polsterelement 12 direkt oder indirekt mit einer Tragkonstruktion, etwa eines Sitzes, verbunden sein. Das Randprofil 32 kann auch unmittelbar Teil der Tragkonstruktion sein oder an dieser mittels geeigneter Befestigungselemente verbunden werden.

Im Bereich der unteren ersten Gewebelage 16 ist in der dargestellten Ausführungsform eine Funktionseinlage 40 angeordnet, welche beispielsweise eine Sitzheizung und/oder elektrische Belegungssensoren aufweisen kann.

Eine erfindungsgemäße Polsteranordnung 10 ist schematisch und beispielhaft anhand einer Sitzfläche 7 eines Fahrzeugsitzes 5 dargestellt. Eine Tragkonstruktion 30 des Sitzes 5 kann ein Metallgestell mit oder ohne einem Formschaum sein, auf welchem das erfindungsgemäße Polsterelement 12 angeordnet, insbesondere aufgespannt ist.

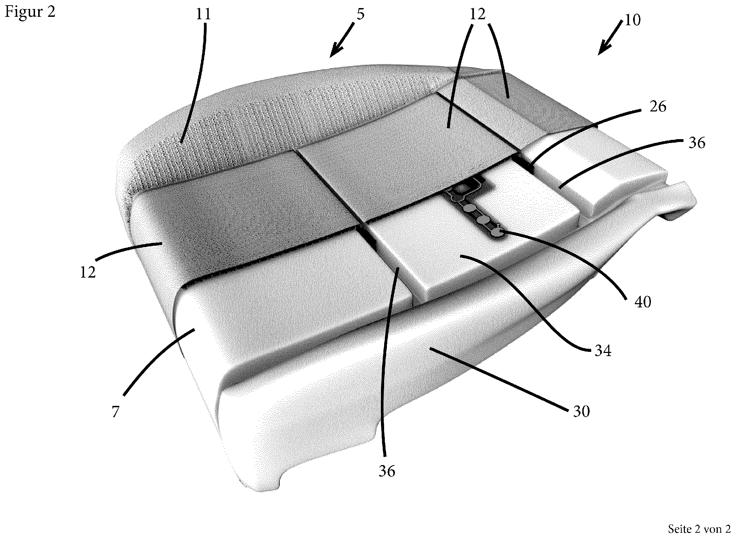

Insbesondere können an der Sitzfläche 7 des Sitzes 5 im Wesentlichen drei Polsterelemente 12 vorgesehen sein, welche zumindest optisch über quer verlaufende Kanäle 36 voneinander getrennt sind. Entlang den Kanälen können Seitenöffnungen 26 zum Zwischenraum 20 des dreidimensionalen Gewebes 14 vorgesehen sein, welche eine Belüftung der Sitzfläche 7 ermöglichen. Grundsätzlich können dabei die Polsterelemente 12 getrennt voneinander ausgebildet sein. Durch ein entsprechend strukturiertes Weben können die drei Polsterelemente 12 gemäß Fig. 2 einteilig gewebt sein, wobei das steife dreidimensionale Gewebe 14 im Bereich der quer verlaufenden Kanäle 36 unterbrochen ist, während eine oder beide Gewebelagen des dreidimensionalen Gewebes weitergeführt sind. Im Bereich der quer verlaufenden Kanäle 36 können die Polsterelemente 12 abgeheftet und so mit der Tragkonstruktion 30 des Sitzes 5 verbunden sein. Zwischen dem Formschaum 34 und zumindest einem Bereich eines Polsterelementes 12 kann eine Funktionseinlage 40 angeordnet werden. Die Funktionseinlage 40 kann eine Sitzheizung und/oder Sitzbelegungssensoren aufweisen. Entlang einer Oberseite zumindest der Seitenwangen der Sitzfläche 7 kann ein Stoffbezug 11 vorgesehen sein.

## Patentansprüche

1. Polsteranordnung mit
- einer Tragkonstruktion (30) und
- mindestens einem daran angebrachten Polsterelement (12) mit einem dreidimensionalen Gewebe (14), welches eine erste Gewebelage (16) und mindestens eine zweite Gewebelage (18) aufweist, welche unter Ausbilden eines Zwischenraums (20) zueinander beabstandet und miteinander verbunden sind,
- wobei die erste Gewebelage (16) zumindest bereichsweise mit einem Halterand (28) ausgebildet ist, und
- wobei das dreidimensionale Gewebe (14) über den Halterand (28) der ersten Gewebelage (16) mit wenigstens einem Teil der Tragkonstruktion (30) verbunden ist,
**dadurch gekennzeichnet,**
- **dass** zwischen der ersten Gewebelage (16) und der zweiten Gewebelage (18) ein hohler, im Wesentlichen formstabiler Zwischenraum (20) ausgebildet ist,
- **dass** zum Bilden des hohlen, im Wesentlichen formstabilen Zwischenraums (20) Polfäden (22), welche im Querschnitt eine Rechteckform aufweisen, etwa vertikal zu der ersten Gewebelage (16) und der zweiten Gewebelage (18) angeordnet sind,
- **dass** die zweite Gewebelage (18) gegenüber der Tragkonstruktion (30) vorsteht, wobei der hohle Zwischenraum (20) seitlich offen ist, wobei eine Durchlüftbarkeit des Gewebes (14) gegeben ist, und
- **dass** in der zweiten Gewebelage (18) Öffnungen im Bereich der rechteckigen Polfäden (22) ausgebildet sind.

2. Polsteranordnung nach Anspruch 1,
**dadurch gekennzeichnet,**
**dass** über eine Fläche des Polsterelementes (12) eine Dichte der Polfäden (28) unterschiedlich ausgebildet ist.

3. Polsteranordnung nach Anspruch 1 oder 2,
**dadurch gekennzeichnet,**
**dass** in der ersten Gewebelage (16) und/oder der zweiten Gewebelage (18) elastische Schussfäden, vorzugsweise mit unterschiedlichen Dicken, vorhanden sind.

4. Polsteranordnung nach einem der Ansprüche 1 bis 3,
**dadurch gekennzeichnet,**
**dass** in der ersten Gewebelage (16) Öffnungen ausgebildet sind.

5. Polsteranordnung nach einem der Ansprüche 1 bis 4,
**dadurch gekennzeichnet,**
**dass** der Halterand (28) der ersten Gewebelage (16) gegenüber der zweiten Gewebelage (18) seitlich vorsteht und durch Weben ausgebildet ist.

6. Polsteranordnung nach einem der Ansprüche 1 bis 5,
**dadurch gekennzeichnet,**
**dass** die erste Gewebelage (16) eine Unterseite und die zweite Gewebelage (18) eine Oberseite des Polsterelementes (12) bildet.

7. Polsteranordnung nach Anspruch 6,
**dadurch gekennzeichnet,**
**dass** die obere zweite Gewebelage (18) mit einer Konturierung ausgebildet, insbesondere gewebt ist.

8. Polsteranordnung nach einem der Ansprüche 1 bis 7,
**dadurch gekennzeichnet,**
**dass** über die Fläche des Polsterelementes (12) der Abstand zwischen der ersten Gewebelage (16) und der zweiten Gewebelage (18) unterschiedlich gewebt ist.

9. Sitz, insbesondere Fahrzeugsitz oder Bürostuhl,
**dadurch gekennzeichnet,**
**dass** mindestens eine Polsteranordnung (10) nach einem der Ansprüche 1 bis 8 vorgesehen ist.

10. Liegemöbel, insbesondere Liege oder Bett,
**dadurch gekennzeichnet,**
**dass** mindestens eine Polsteranordnung (10) nach einem der Ansprüche 1 bis 8 vorgesehen ist

## Claims

1. Upholstery arrangement having
- a carrier construction (30) and
- at least one upholstery element (12) which is attached thereto and has a three-dimensional fabric (14) that has a first fabric layer (16) and at least one second fabric layer (18) which, by forming an intermediate space (20), are spaced apart from each other and connected to each other,
- wherein the first fabric layer (16) is designed at least in some areas with a retaining edge (28), and
- wherein the three-dimensional fabric (14) is connected via the retaining edge (28) of the first fabric layer (16) to at least a part of the carrier construction (30),
**characterized in that**
- between the first fabric layer (16) and the second fabric layer (18) a hollow, substantially dimensionally stable intermediate space (20) is designed,
- **in that** in order to form the hollow, substantially dimensionally stable intermediate space (20) pile threads (22) having a rectangular shape in cross-section are arranged approximately vertically to the first fabric layer (16) and the second fabric layer (18),
- **in that** the second fabric layer (18) protrudes with respect to the carrier construction (30), wherein the hollow intermediate space (20) is laterally open, wherein aeratability of the fabric (14) is given, and
- **in that** in the second fabric layer (18) openings are designed in the area of the rectangular pile threads (22).

2. Upholstery arrangement according to claim 1,
**characterized in that**
across a surface of the upholstery element (12) a density of the pile threads (22) is designed differently.

3. Upholstery arrangement according to claim 1 or 2,
**characterized in that**
in the first fabric layer (16) and/or the second fabric layer (18) elastic weft threads, preferably with varying thicknesses, are present.

4. Upholstery arrangement according to any one of claims 1 to 3,
**characterized in that**
in the first fabric layer (16) openings are designed.

5. Upholstery arrangement according to any one of claims 1 to 4,
**characterized in that**
the retaining edge (28) of the first fabric layer (16) protrudes laterally with respect to the second fabric layer (18) and is designed through weaving.

6. Upholstery arrangement according to any one of claims 1 to 5,
**characterized in that**
the first fabric layer (16) forms an underside and the second fabric layer (18) an upper side of the upholstery element (12).

7. Upholstery arrangement according to claim 6,
**characterized in that**
the upper second fabric layer (18) is designed with a contouring, in particular being woven.

8. Upholstery arrangement according to any one of claims 1 to 7,
**characterized in that**
across the surface of the upholstery element (12) the distance between the first fabric layer (16) and the second fabric layer (18) is woven differently.

9. Seat, in particular vehicle seat or office chair,
**characterized in that**
at least one upholstery arrangement (10) according to any one of claims 1 to 8 is provided.

10. Lounger furniture, in particular lounger or bed,
**characterized in that**
at least one upholstery arrangement (10) according to any one of claims 1 to 8 is provided.

## Revendications

1. Ensemble de coussin avec
- une structure porteuse (30) et
- au moins un élément de coussin (12) installé au niveau de celle-ci avec un tissu (14) tridimensionnel, lequel présente une première couche de tissu (16) et au moins une deuxième couche de tissu (18), lesquelles sont espacées l'une par rapport à l'autre et sont reliées entre elles en formant un espace intermédiaire (20),
- dans lequel la première couche de tissu (16) est réalisée au moins par endroits avec un bord de maintien (28), et
- dans lequel le tissu (14) tridimensionnel est relié à au moins une partie de la structure porteuse (30) par l'intermédiaire du bord de maintien (28) de la première couche de tissu (16),
**caractérisé en ce**
- **qu'**un espace intermédiaire (20) creux sensiblement indéformable est réalisé entre la première couche de tissu (16) et la deuxième couche de tissu (18),
- **que** des fils de poils (22), lesquels présentent dans la section transversale une forme rectangulaire, sont disposés de manière sensiblement verticale par rapport à la première couche de tissu (16) et à la deuxième couche de tissu (18) pour former l'espace intermédiaire (20) creux sensiblement indéformable,
- **que** la deuxième couche de tissu (18) fait saillie par rapport à la structure porteuse (30), dans lequel l'espace intermédiaire (20) creux est ouvert latéralement, dans lequel une respirabilité du tissu (14) existe, et
- **que** des ouvertures dans la zone des fils de poils (22) rectangulaires sont réalisées dans la deuxième couche de tissu (18).

2. Ensemble de coussin selon la revendication 1,
**caractérisé en ce**
**qu'**une densité des fils de poils (28) est réalisée de manière différente sur une surface de l'élément de coussin (12).

3. Ensemble de coussin selon la revendication 1 ou 2,
**caractérisé en ce**
**que** des fils de trame élastiques, de préférence avec des épaisseurs différentes, sont présents dans la première couche de tissu (16) et/ou la deuxième couche de tissu (18).

4. Ensemble de coussin selon l'une quelconque des revendications 1 à 3,
**caractérisé en ce**
**que** des ouvertures sont réalisées dans la première couche de tissu (16).

5. Ensemble de coussin selon l'une quelconque des revendications 1 à 4,
**caractérisé en ce**
**que** le bord de maintien (28) de la première couche de tissu (16) fait saillie latéralement par rapport à la deuxième couche de tissu (18) et est réalisé par tissage.

6. Ensemble de coussin selon l'une quelconque des revendications 1 à 5,
**caractérisé en ce**
**que** la première couche de tissu (16) forme un côté inférieur et la deuxième couche de tissu (18), un côté supérieur de l'élément de coussin (12).

7. Ensemble de coussin selon la revendication 6,
**caractérisé en ce**
**que** la deuxième couche de tissu (18) supérieure est réalisée, en particulier est tissée, avec un contourage.

8. Ensemble de coussin selon l'une quelconque des revendications 1 à 7,
**caractérisé en ce**
**que** l'espace entre la première couche de tissu (16) et la deuxième couche de tissu (18) est tissé différemment sur la surface de l'élément de coussin (12).

9. Siège, en particulier siège de véhicule ou chaise de bureau,
**caractérisé en ce**
**qu'**au moins un ensemble de coussin (10) selon l'une quelconque des revendications 1 à 8 est prévu.

10. Meuble de couchage, en particulier chaise longue ou lit,
**caractérisé en ce**
**qu'**au moins un ensemble de coussin (10) selon l'une quelconque des revendications 1 à 8 est prévu.
